# FASCICULE DE BREVET EUROPEEN

(11) **EP 1 711 435 B1**
(45) Date de publication et mention de la délivrance du brevet: **08.12.2010**
(21) Numéro de dépôt: 04818446.9
(22) Date de dépôt: 15.10.2004
(51) Int. Cl.: C02F 1/44, C02F 1/78, B01D 61/18, B01D 65/02

(54) **INSTALLATION ET PROCEDE D'EPURATION D'UN EFFLUENT AQUEUX PAR OXYDATION ET PAR FILTRATION MEMBRANAIRE.**
VORRICHTUNG UND VERFAHREN ZUR REINIGUNG VON ABWASSER DURCH OXIDATION UND MEMBRANFILTRATION
INSTALLATION AND METHOD FOR THE PURIFICATION OF AN AQUEOUS EFFLUENT BY MEANS OF OXIDATION AND MEMBRANE FILTRATION

(30) Priorité: 30.10.2003 FR 0312765
(43) Date de publication de la demande: 18.10.2006
(73) Titulaire: OTV SA, 94417 Saint-Maurice Cedex (FR)
(72) Inventeur: DAINES, Catherine, F-78160 Marly Le Roi (FR); SCHROTTER, Jean-Christophe, F-78600 Maisons-Laffitte (FR); PAILLARD, Hervé, F-86340 La Villedieu Du Clain (FR)
(74) Mandataire: Larcher, Dominique
(86) Numéro de dépôt international: PCT/FR2004/002653
(87) Numéro de publication internationale: WO 2005/047191

(56) Documents cités:
- US-A- 5 607 593
- US-A- 5 932 099
- US-A1- 2003 127 389
- US-A1- 2003 178 365
- PATENT ABSTRACTS OF JAPAN vol. 2000, no. 10, 17 novembre 2000 (2000-11-17) & JP 2000 197895 A (HITACHI ZOSEN CORP), 18 juillet 2000 (2000-07-18)
- KIM J-O ET AL: "Effect of intermittent back ozonation for membrane fouling reduction in microfiltration using a metal membrane" DESALINATION, ELSEVIER SCIENTIFIC PUBLISHING CO, AMSTERDAM, NL, vol. 143, no. 3, 10 juin 2002 (2002-06-10), pages 269-278, XP004374884 ISSN: 0011-9164
- TAKIZAWA S ET AL: "Membrane fouling decrease by microfiltration with ozone scrubbing" DESALINATION, ELSEVIER SCIENTIFIC PUBLISHING CO, AMSTERDAM, NL, vol. 106, no. 1, 1 août 1996 (1996-08-01), pages 423-426, XP004019195 ISSN: 0011-9164

## Description

L'invention concerne le domaine de l'épuration des effluents aqueux et s'applique notamment, mais non exclusivement :
- au traitement des eaux usées industrielles ou domestiques ;
- au traitement des lixiviats (percolats) de décharge ;
- au traitement des eaux de surface en vue de leur potabilisation ;
- au traitement de dépollution des eaux souterraines ;
- au traitement des concentrats de filtration membranaire.

Les traitements d'épuration des effluents aqueux ont pour objectif principal d'éliminer la matière organique difficilement biodégradable contenue dans ces effluents. Plusieurs procédés peuvent être mis en oeuvre pour atteindre un tel objectif.

Il est ainsi connu de filtrer les effluents sur un matériau adsorbant, tel que du charbon actif, susceptible de retenir la matière organique qu'ils contiennent. Une telle technique présente l'inconvénient majeur de nécessiter de grandes quantités de matériau adsorbant, pour une quantité donnée de matière organique à éliminer, et donc d'être très coûteuse. La régénération du matériau adsorbant est elle-même onéreuse.

D'autres procédés mettent en oeuvre une filtration sur membrane, tel qu'une membrane de microfiltration, d'ultrafiltration, de nanofiltration, ou d'osmose inverse. Outre le fait qu'ils sont également relativement coûteux, de tels procédés présentent aussi l'inconvénient de concentrer la matière organique polluante plutôt que de la détruire. Cette matière organique récupérée doit donc ensuite être dégradée, généralement par incinération.

Encore d'autres procédés d'élimination de la matière organique mettent en oeuvre une étape consistant à faire floculer celle-ci, en introduisant un ou plusieurs composés coagulants dans les effluents traités. Ces composés coagulants peuvent être des composés minéraux, tels que par exemple du polychlorure d'aluminium, du sulfate d'alumine ou du chlorure ferrique ou bien des composés organiques, tels que par exemple des polymères cationiques. Les flocs formés par la matière organique coagulés peuvent ensuite être éliminés par décantation.

De tels procédés présentent l'inconvénient majeur de produire énormément de boues, qui constituent un sous-produit difficile à éliminer. On notera que, selon un procédé de coagulation-floculation-décantation amélioré, l'étape de floculation peut être combinée à une oxydation par introduction dans l'effluent du réactif de Fenton (H₂O₂/Fe²⁺). Bien que moins importantes que dans le cas d'un procédé de floculation classique, les quantités de boues produites lors de la mise en oeuvre d'un tel procédé n'en restent pas moins très importantes.

Enfin, certains procédés d'épuration des effluents aqueux mettent en oeuvre une étape d'oxydation poussée de la matière organique grâce à un oxydant puissant (tel que par exemple l'ozone, le chlore, le bioxyde de chlore) ou grâce à un système oxydant puissant (tel que par exemple Ozone/UV, ozone peroxyde d'hydrogène, peroxyde d'hydrogène/UV). L'oxydation permet la dégradation des molécules organiques en molécules plus petites et mieux biodégradables.

Parmi les produits oxydants classiquement utilisés pour oxyder la matière organique, l'ozone est l'oxydant le plus intéressant, car il est capable de détruire complètement la matière organique en la « minéralisant », sous certaines conditions de mise en oeuvre, en dioxyde de carbone et en sels minéraux. De plus, l'ozone autorise des réactions radicalaires impliquant le radical libre OH qui permet d'oxyder très fortement la matière organique lorsqu'il est appliqué à un pH basique ou en combinaison avec le peroxyde d'hydrogène ou bien encore avec un rayonnement ultra-violet (le potentiel d'oxydo-réduction du peroxyde d'hydrogène est de 1,6 volts, celui de l'ozone est de 2,07 tandis que celui du radical OH est de 2,7). Le brevet américain US5607593 décrit un tel procédé.

Les procédés mettant en oeuvre une oxydation permettent donc de détruire la matière organique polluante contenue dans les effluents aqueux et non simplement de la concentrer comme c'est le cas dans les procédés de filtration ou de la séparer de la phase aqueuse comme c'est le cas dans les procédés de coagulation-floculation-décantation.

De tels procédés montrent toutefois l'inconvénient économique de nécessiter des quantités relativement importantes de produit(s) oxydant(s) pour traiter une quantité donnée d'effluents.

L'invention a pour objectif de fournir un procédé d'épuration d'effluents aqueux incluant une étape d'oxydation optimisée, c'est-à-dire dans laquelle la quantité de produit oxydant nécessaire pour traiter un volume donné d'effluent aura été réduite par rapport aux techniques classiques d'oxydation.

Un tel procédé pourra être utilisé pour épurer les eaux très chargées en matière organique comme par exemple certains effluents industriels ou encore les lixiviats de décharge, c'est-à-dire les eaux s'écoulant à travers des déchets stockés. Ces effluents se caractérisent généralement par une charge en matière organique très importante et très peu biodégradable. Classiquement ces lixiviats montrent un ratio DBO₅/DCO souvent inférieur à 0,1 traduisant une très faible biodégradabilité (la DBO₅ représente la « Demande Biologique en Oxygène » de l'effluent et traduit la quantité totale de matière organique présente dans celui-ci). L'épuration de tels effluents est donc problématique puisque seuls des procédés de traitement coûteux peuvent être utilisés pour les décharger de leurs matières organiques. En particulier, il ne pouvait être envisagé jusqu'ici de traiter les lixiviats de décharge par des techniques mettant en oeuvre des oxydants puissants avec des coûts de traitement raisonnables.

Un autre objectif de l'invention est de fournir une installation d'épuration mettant en oeuvre peu de produit par rapport aux techniques existantes de l'état de l'art.

Ces objectifs, ainsi que d'autres qui apparaîtront par la suite, sont atteints à l'aide d'une installation d'épuration d'un effluent aqueux chargé en matière organique, du type comprenant au moins un réacteur présentant au moins une arrivée dudit effluent, au moins une sortie dudit effluent, au moins un évent, des moyens d'injection d'au moins un gaz oxydant, ledit réacteur contenant un lit d'un matériau permettant de catalyser la réaction d'oxydation de ladite matière organique dudit effluent et/ou d'adsorber cette matière organique,
caractérisée en ce que ledit réacteur définit une unique chambre intégrant un dispositif de filtration à membranes immergées et ledit lit, lesdits moyens d'injection d'au moins un gaz oxydant et ladite arrivée dudit effluent étant prévus à la base dudit réacteur de telle sorte que ledit effluent et ledit gaz oxydant soient injectés à co-courant en direction dudit lit - puis dudit dispositif de filtration à membranes.

Clairement, l'invention propose donc une solution pour regrouper plusieurs traitements à l'intérieur d'un même cuvelage.

On comprendra qu'une telle intégration offre de multiples avantages, au rang desquels on peut citer :
- la réduction des coûts de fonctionnement liés à la filtration et à la mise en suspension du matériau catalyseur et/ou adsorbant ;
- le gain économique du à la suppression d'ouvrages et d'accessoires ;
- le gain de place induit par la réalisation d'un réacteur plus compact ;
- la simplification du schéma hydraulique avec la réduction des équipements.

Grâce à une telle intégration selon l'invention, on obtient une combinaison de traitement de l'effluent qui présente une réelle synergie.

En effet, le gaz oxydant exerce dans l'installation selon l'invention plusieurs fonctions du fait du regroupement dans une unique chambre des moyens de traitement tels ceux définis.

Tout d'abord, le gaz oxydant exerce bien entendu une fonction de dégradation des matières organiques dissoutes dans l'effluent à traiter.

Le gaz oxydant exerce une seconde fonction qui est de maintenir ledit matériau en suspension dans le réacteur, ce qui permet d'optimiser l'action de celui-ci.

Le gaz oxydant exerce encore une autre fonction qui est de limiter le colmatage des membranes du dispositif de filtration, grâce à l'action mécanique du gaz sur les membranes qui conduit notamment à améliorer le débit de l'effluent.

On note que le regroupement selon l'invention de moyens d'injection d'un gaz oxydant tel que l'ozone et d'un dispositif de filtration à membranes dans un même réacteur est une approche allant à l'encontre des pratiques traditionnelles qui conduisent à séparer, à l'aide de deux cuves distinctes, le traitement d'oxydation et le dispositif à membranes, l'ozone (utilisée généralement comme gaz oxydant) étant considérée par l'homme du métier comme source de dégradation des membranes.

Or, de façon surprenante, la Demanderesse a constaté que l'intégration dans un même réacteur de traitements d'oxydation et de filtration membranaire, n'entraîne pas de dégradation par l'ozone des membranes après oxydation des matières organiques réfractaires de l'effluent. Au contraire, l'ozone contribue à limiter le colmatage des membranes, combinant l'action mécanique des bulles de gaz et éventuellement l'action oxydante sur la matière organique colmatante présente à la surface de la membrane, augmentant ainsi les durées de cycle de celle-ci.

Sous des conditions optimales de fonctionnement, cette action de l'ozone, ou plus généralement du gaz oxydant, sur les membranes s'avère donc plus performante que si l'on procédait à une simple aération des membranes par injection d'air ou d'oxygène injecté au niveau des membranes.

L'invention s'avère donc particulièrement efficace et économique, comparée à l'approche traditionnelle qui aurait conduit l'homme du métier à utiliser deux cuves : l'une pour l'oxydation par l'ozone, éventuellement en présence d'un catalyseur, de l'effluent, l'autre cuve pour la filtration membranaire de l'effluent oxydé, cette seconde cuve étant pourvue d'un système d'aération spécifique aux membranes. De plus, ce type d'installation conduirait l'éventuel catalyseur non ozoné à se saturer dans la seconde cuve, ce qui risquerait bien entendu d'amener ce catalyseur à ne plus pouvoir jouer son rôle dans la première cuve une fois réinjecté dans celle-ci.

En outre, l'installation selon l'invention permet d'obtenir une régénération du matériau catalyseur et/ou adsorbant directement au sein du réacteur, cette régénération s'opérant avantageusement de façon continue.

Selon une solution avantageuse, ledit matériau est constitué par un matériau solide minéral présentant une capacité d'adsorption des matières organiques, préférentiellement dopé en substances métalliques.

On obtient de cette façon un lit d'un matériau particulièrement efficace et actif puisqu'il optimise l'action d'oxydation du gaz oxydant et retient en son sein une fraction importante des matières organiques de l'effluent.

Avantageusement, ledit matériau est présent dans ledit réacteur sous forme d'un lit fluidisé. Dans ce cas, ledit catalyseur présente préférentiellement une granulométrie inférieure à 100 µm et, d'une façon préférentielle, une granulométrie comprise entre environ 10nm et environ 40 µm.

Selon une solution préférée, ledit matériau comprend l'un au moins des matériaux appartenant au groupe suivant :
- alumine ;
- titane ;
- charbon ;
- charbon actif ;
- oxydes polymétalliques.

Selon une première variante de réalisation, les membranes sont des membranes de micro-filtration.

Selon une deuxième variante de réalisation, les membranes sont des membranes d' ultra-filtration.

Selon une troisième variante de réalisation, les membranes sont des membranes de nano-filtration.

En fonction de l'objectif recherché, on adoptera l'une ou l'autre de ces variantes, cet objectif pouvant par exemple être d'obtenir une simple séparation du matériau et de l'effluent traité, avec traitement des substances indésirables.

Par ailleurs, selon un premier mode de réalisation, les membranes sont de type minéral.

Selon un deuxième mode de réalisation, les membranes sont de types organiques.

Avantageusement, ledit matériau forme une pré-couche à la surface dudit dispositif de filtration à membranes.

Le gâteau ainsi formé par le matériau à la surface de la membrane tend à améliorer sensiblement les performances de filtration et de traitement de la membrane correspondante.

Préférentiellement, ledit gaz oxydant comprend l'un au moins des oxydants appartenant au groupe suivant :
- air;
- ozone ;
- air ozoné ;
- oxydes d'azote ;
- oxygène ;

L'ozone pourra être choisi en particulier comme oxydant puissant pouvant donner naissance à des radicaux libres très oxydants et permettant la décomposition de la matière organique soit en la transformant en matières biodégradables soit en la minéralisant en dioxyde de carbone et en sels minéraux. D'autres oxydants, tels que ceux mentionnés précédemment, peuvent toutefois être envisagés par l'homme du métier.

Selon une solution avantageuse, l'installation comprend des moyens d'ajout d'H₂O₂ dans ledit réacteur.

Cet ajout d'H₂O₂ pourra être réalisé de façon continue ou séquentielle, son pouvoir oxydant se combinant éventuellement avec celui de l'ozone.

Selon une autre caractéristique, l'installation comprend une boucle de re-circulation dudit effluent dans ledit réacteur.

On peut de cette façon assurer un temps de contact de l'effluent avec les réactifs au sein du réacteur tout en autorisant un débit de l'effluent assez soutenu.

On peut de cette façon augmenter, si besoin, les temps de traitement de l'effluent au sein du réacteur.

Préférentiellement, ledit réacteur est réalisé sous la forme d'une colonne non agitée mécaniquement.

L'invention concerne également un procédé mis en oeuvre à l'aide de l'installation qui vient d'être décrite et caractérisé en ce que ledit effluent et gaz oxydant sont injectés à co-courant à la base dudit réacteur en direction dudit lit de matériau catalyseur puis dudit dispositif de filtration à membranes, l'injection dudit gaz oxydant dans ledit réacteur étant réalisé de façon continue.

Selon une solution préférée, la durée de contact entre ledit effluent et ledit matériau est comprise entre environ 5 minutes et environ 3 heures, cette durée étant préférentiellement comprise entre environ 30 minutes et environ 60 minutes.

Avantageusement, le procédé comprend une étape de re-circulation du gaz provenant de l'évent du réacteur.

Préférentiellement, l'étape de filtration est effectuée par aspiration en configuration externe-interne.

Cette étape étant avantageusement réalisée avec une pression d'aspiration comprise inférieure à environ 1 bar, et préférentiellement avec une pression d'aspiration comprise entre environ 0,1 bar et environ 0,8 bar.

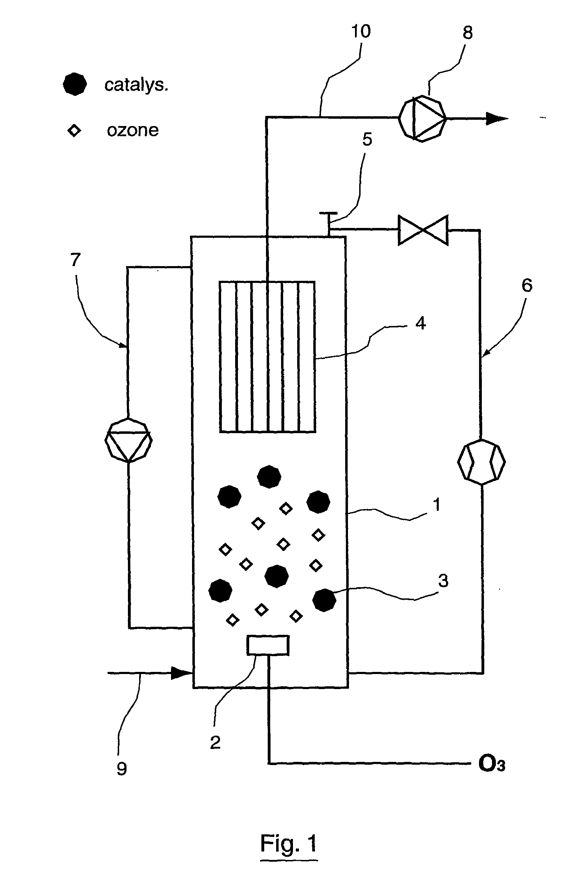

D'autres caractéristiques et avantages de l'invention apparaîtront plus clairement à la lecture de la description suivante d'un mode de réalisation préférentiel de l'installation selon l'invention, donné à titre d'exemple illustratif et non limitatif, en référence à la figure 1 unique qui est une vue schématique d'une installation selon l'invention.

Tel qu'illustré par la figure 1, l'installation comprend un réacteur 1 présentant une conduite 9 d'arrivée de l'effluent à traiter, une conduite 10 de sortie de l'effluent traité, un évent 5 dans sa partie supérieure destiné à l'évacuation des gaz et des moyens de recirculation 6 de ce gaz en pied de réacteur..

L'installation comprend en outre des moyens d'injection continue 2 d'ozone dans le réacteur, qui contient par ailleurs un matériau 3 se présentant sous forme d'un lit fluidisé.

Un dispositif de filtration membranaire 4 est de plus intégré dans le réacteur 1.

Ainsi constitué, le réacteur 1 définit donc une unique chambre qui intègre à la fois des traitements d'oxydation et de filtration de l'effluent, cette chambre unique étant prévue selon l'invention de telle sorte que l'effluent et le gaz oxydant (en l'occurrence l'ozone) soit injecté à co-courant en direction du lit de matériau catalyseur 3 puis des membranes de filtration 4.

On note que ce réacteur est réalisé sous la forme d'une colonne non agitée mécaniquement, l'injection de l'effluent et du gaz oxydant étant réalisée à la base de la colonne.

Les moyens d'injection 2 du gaz oxydant sont par exemple constitués par un émulseur (encore appelé trompe à vide ou hydroinjecteur). Il est également possible d'utiliser des appareils de type « Venturi » à émulsion, ou tout autre appareillage permettant la formation de micro-bulles de gaz oxydant dans le liquide à traiter.

Le matériau utilisé pour améliorer la réactivité de l'ozone est un matériau solide minéral en poudre présent dans le réacteur dans une proportion comprise entre 0,5 g/l et 50 g/l.

Selon le présent mode de réalisation, ce matériau catalyseur est de l'alumine boehmite (γ Al₂O₃), calciné à une température inférieure à 600°C. On note que l'alumine boehmite peut être utilisée pure ou sous une forme enrichie en substances métalliques (notamment en vue d'accroître sa capacité d'adsorption des matières organiques).

De plus, le matériau catalyseur est finement divisé de telle sorte que le diamètre de ses particules soit inférieur à 50 µm (préférentiellement, les particules ont un diamètre d'environ 30 µm), le catalyseur présentant donc une surface d'échange très importante permettant l'adsorption de la majeure partie des matières organiques de l'effluent.

Par ailleurs, la séparation des particules de catalyseur contenues dans l'effluent est obtenue par le dispositif de filtration à membranes 4, réalisé à l'aide de membranes dont les pores présentent préférentiellement des dimensions inférieures à 0,1 µm. Préférentiellement, ces membranes sont réalisées en céramique ou en un polymère organique résistant à l'ozone.

On note que, notamment en fonction de la dimension des particules du catalyseur, les membranes utilisées pourront être des membranes de micro-filtration, d'ultra-filtration ou de nano-filtration.

On note également que la transition entre le lit fluidisé du matériau catalyseur 3 et les membranes 4 est telle que le catalyseur forme une pré-couche à la surface des membranes 4.

Selon le présent mode de réalisation, la filtration de l'effluent est effectuée par aspiration en configuration externe-interne, à l'aide d'une pompe 8 prévue sur la canalisation d'évacuation 10, ladite pompe permettant d'obtenir une pression d'aspiration d'environ 0,8 bar.

Par ailleurs, on prévoit une boucle de re-circulation 7 de l'effluent, à l'aide de laquelle on fait recirculer l'effluent dans le réacteur, de façon continue (ou semi-continue selon un autre mode de réalisation envisageable). Une boucle de reciculation 6 des gaz provenant de l'évent 5 est également prévu.

D'autres modes de réalisation ou perfectionnements sont bien entendu envisageables, notamment en prévoyant des moyens d'ajout dans le réacteur d'H₂O₂, en tant que seul oxydant ou combiné avec l'ozone.

Deux tests réalisés avec l'installation selon l'invention vont maintenant être décrits.

Ces tests ont été réalisés en prenant comme effluent à traiter, une eau chargée produite par l'industrie cosmétique et ayant subi un pré-traitement biologique.

### Tests en mode batch.

Une première série de tests est réalisée en mode batch. On introduit 5 litres d'effluent dans le réacteur. L'oxydation de l'effluent est réalisée dans ce réacteur dans lequel de l'ozone est injectée de façon continue, l'eau traitée étant séparée du catalyseur (γ Al₂O₃) à l'aide de membranes de micro-filtration immergées, le perméat étant recirculé de façon continue dans le réacteur.

Selon un premier test, on prévoit de traiter avec un débit recirculé de perméat de 10 l/h et un temps d'exposition de 60 mn, un effluent présentant une DCO (Demande Chimique en Oxygène) de 213 mg/l et un taux de COT (Carbone Organique Total) de 75,8 mg/l. Le traitement effectué est un traitement à l'ozone seul (sans catalyseur), l'ozone étant injectée à raison de 4,6 g O₃/g DCO.

Les résultats de ce premier test sont les suivants :
- DCO final : 74,8 mg/l, soit un abattement de 64,9 %
- COT final : 34,1 mg/l, soit un abattement de 55 %
- quantité O₃ consommée/COT éliminé : 8,4

Selon un deuxième test, on prévoit de traiter avec un débit recirculé de perméat de 10 l/h et un temps d'exposition de 60 mn, un effluent présentant une DCO (Demande Chimique en Oxygène) de 181 mg/l et un taux de COT (Carbone Organique Total) de 61,4 mg/l. Le traitement effectué est un traitement à l' ozone en présence d'un catalyseur présent à raison de 20 g/l, l'ozone étant injectée à raison de 4,7 g O₃/g DCO.

Les résultats de ce deuxième test sont les suivants :
- DCO final : 47,7 mg/l, soit un abattement de 73,6 %
- COT final : 19,9 mg/l, soit un abattement de 67,6 %
- quantité O₃ consommée/COT éliminé : 6,3

Ces premiers tests indiquent clairement que l'oxydation catalysée suivie d'une filtration membranaire dans une installation selon l'invention, procure un meilleur abattement tant de DCO que de COT, comparé à un traitement à l'ozone seul, ceci avec une moindre consommation d'ozone.

### Tests en mode continu.

Une seconde série de tests est réalisée en continu. On injecte un effluent à traiter dans le réacteur avec un débit de 101/h. L'oxydation de l'effluent est réalisée dans ce réacteur dans lequel de l'ozone est injectée de façon continue, l'eau traitée étant séparée du catalyseur (γ Al₂O₃) à l'aide de membranes de micro-filtration immergées, le perméat n'étant pas recirculé dans le réacteur, à l'inverse du mode semi-continu

Selon un premier test, on prévoit de traiter avec un débit de 10 1/h et un temps d'exposition de 2 h, un effluent présentant une DCO (Demande Chimique en Oxygène) de 185 mg/l. Le traitement effectué est un traitement à l'ozone seul (sans catalyseur), l'ozone étant injectée à raison de 3,8 g O₃/g DCO.

Les résultats de ce test sont les suivants :
- DCO final : 104 mg/l, soit un abattement de 43,8 %
- COT final : 44,5 mg/l, avec un abattement de 35,7 %
- quantité O₃ consommée/COT éliminé : 11,1

Selon un deuxième test, on prévoit de traiter avec un débit de 101/h et un temps d'exposition de 48 h, un effluent présentant une DCO (Demande Chimique en Oxygène) de 200 mg/l et un taux de COT (Carbone Organique Total) de 69,2 mg/l. Le traitement effectué est un traitement à l'ozone en présence d'un catalyseur présent à raison de 20 g/l, l'ozone étant injectée à raison de 4,2 g O₃/g DCO.

Les résultats de ce deuxième test sont les suivants :
- DCO final : 100 mg/l, soit un abattement de 50 %
- COT final : 40 mg/l, soit un abattement de 42,2 %
- quantité O₃ consommée/COT éliminé : 9,9

Selon un troisième test, on prévoit de traiter avec un débit de 10 1/h et un temps d'exposition de 5 h, un effluent présentant une DCO (Demande Chimique en Oxygène) de 200 mg/l. Le traitement effectué est un traitement à l'ozone en présence d'un catalyseur présent à raison de 20 g/l, avec ajout d'H₂O₂, l'ozone étant injectée à raison de 5,9 g O₃/g DCO.

Les résultats de ce troisième test sont les suivants :
- DCO final : 72 mg/l, soit un abattement de 64 %
- COT final : 24,4 mg/l, avec un abattement de 64,7 %
- quantité O₃ consommée/COT éliminé : 9,1

Ces tests indiquent que le procédé et l'installation selon l'invention permettent d'obtenir de très bons résultats comparés à d'autres traitements.

## Revendications

1. Installation d'épuration d'un effluent aqueux chargé en matière organique, du type comprenant au moins un réacteur (1) présentant au moins une arrivée (9) dudit effluent, au moins une sortie (10) dudit effluent, au moins un évent (5), des moyens d'injection (2) d'au moins un gaz oxydant, ledit réacteur contenant un lit d'un matériau (3) permettant de catalyser la réaction d'oxydation de ladite matière organique dudit effluent et/ou d'adsorber cette matière organique,
**caractérisée en ce que** ledit réacteur définit une unique chambre intégrant un dispositif de filtration à membranes immergées (4) et ledit lit (3), lesdits moyens d'injection (2) d'au moins un gaz oxydant et ladite arrivée (9) dudit effluent étant prévus à la base dudit réacteur de telle sorte que ledit effluent et ledit gaz oxydant soient injectés à co-courant en direction dudit lit - (3) puis dudit dispositif de filtration à membranes (4).

2. Installation d'épuration selon la revendication 1, **caractérisée en ce que** ledit matériau (3) est constitué par un matériau solide minéral présentant une capacité d'adsorption des matières organiques.

3. Installation d'épuration selon la revendication 2, **caractérisée en ce que** ledit solide minéral est dopé en substances métalliques.

4. Installation d'épuration selon l'une quelconque des revendications 1 à 3, **caractérisée en ce que** ledit matériau (3) est présent dans ledit réacteur (1) sous forme d'un lit fluidisé.

5. Installation d'épuration selon la revendication 4, **caractérisée en ce que** ledit matériau (3) présente une granulométrie inférieure à 100 µm.

6. Installation d'épuration selon la revendication 5, **caractérisée en ce que** ledit matériau (3) présente une granulométrie comprise entre environ 10nm et environ 40 µm.

7. Installation d'épuration selon l'une des revendications 2 à 6, **caractérisée en ce que** ledit matériau (3) comprend l'un au moins des matériaux appartenant au groupe suivant :
- alumine ;
- titane;
- charbon ;
- charbon actif ;
- oxydes polymétalliques.

8. Installation d'épuration selon l'une quelconque des revendications 1 à 7, **caractérisée en ce que** les membranes (4) sont des membranes de micro-filtration.

9. Installation d'épuration selon l'une quelconque des revendications 1 à 7, **caractérisée en ce que** les membranes (4) sont des membranes d'ultra-filtration.

10. Installation d'épuration selon l'une quelconque des revendications 1 à 7, **caractérisée en ce que** les membranes (4) sont des membranes de nano-filtration.

11. Installation d'épuration selon l'une quelconque des revendications 8 à 10, **caractérisée en ce que** lesdites membranes (4) sont de type minéral.

12. Installation d'épuration selon l'une quelconque des revendications 8 à 10, **caractérisée en ce que** lesdites membranes (4) sont de type organique.

13. Installation d'épuration selon l'une quelconque des revendications 1 à 12, **caractérisée en ce que** ledit matériau catalyseur (3) forme une pré-couche à la surface dudit dispositif de filtration à membranes (4).

14. Installation d'épuration selon l'une quelconque des revendications 1 à 13, **caractérisée en ce que** ledit gaz oxydant comprend l'un au moins des oxydants appartenant au groupe suivant :
- air ;
- ozone ;
- air ozone ;
- oxydes d'azote ;
- oxygène ;

15. Installation d'épuration selon l'une quelconque des revendications 1 à 14, **caractérisée en ce qu'**elle comprend des moyens d'ajout d'H₂O₂ dans ledit réacteur.

16. Installation d'épuration selon l'une quelconque des revendications 1 à 15, **caractérisée en ce qu'**elle comprend une boucle de re-circulation (7) dudit effluent dans ledit réacteur.

17. Installation d'épuration selon l'une quelconque des revendications 1 à 16 **caractérisée en ce qu'**elle comprend une boucle de re-circulation (6) des gaz provenant dudit évent (5).

18. Installation d'épuration selon l'une quelconque des revendications 1 à 17, **caractérisée en ce que** ledit réacteur (1) est réalisé sous la forme d'une colonne non agitée mécaniquement.

19. Procédé mis en oeuvre à l'aide d'une installation selon l'une quelconque des revendications 1 à 18, **caractérisé en ce que** ledit effluent et ledit gaz oxydant sont injectés à co-courant à la base dudit réacteur en direction dudit lit de matériau catalyseur (3) puis dudit dispositif de filtration à membranes (4), l'injection dudit gaz oxydant dans ledit réacteur (1) étant réalisé de façon continue.

20. Procédé mis en oeuvre à l'aide d'une installation selon la revendication 19, **caractérisé en ce que** la durée de contact entre ledit effluent et ledit matériau (3) est comprise entre environ 5 minutes et environ 3 heures.

21. Procédé mis en oeuvre à l'aide d'une installation selon la revendication 20, **caractérisé en ce que** la durée de contact entre ledit effluent et ledit matériau (3) est comprise entre environ 30 minutes et environ 60 minutes.

22. Procédé selon l'une quelconque des revendications 19 à 21, **caractérisé en ce qu'**il comprend une étape de re-circulation dudit effluent.

23. Procédé selon l'une quelconque des revendications 19 à 22 **caractérisé en ce qu'**il comprend une étape de re-circulation des gaz.

24. Procédé selon l'une quelconque des revendications 19 à 23, **caractérisé en ce que** l'étape de filtration est effectuée par aspiration en configuration externe-interne.

25. Procédé selon la revendication 24, **caractérisé en ce que** ladite étape de filtration est réalisée avec une pression d'aspiration inférieure à 1 bar.

26. Procédé selon la revendication 25, **caractérisé en ce que** ladite étape de filtration est réalisée avec une pression d'aspiration comprise entre environ 0,1 bar et environ 0,8 bar.

## Claims

1. Purification installation for an aqueous effluent containing organic material of the type including at least one reaction vessel (1) with at least one inlet (9) of the said effluent, at least one outlet (10) of the said effluent, at least one vent (5), injection means (2) for at least one oxidising gas, the said reaction vessel containing a bed of a material (3) capable of catalysing the oxidation reaction of the said organic material of the said effluent and / or adsorbing this organic material,
**characterised in that** the said reaction vessel defines a single chamber including a filtering device with immersed membranes (4) and said bed (3), said injection means (2) for at least one oxidising gas and said inlet (9) of the said effluent being provided at the bottom of said reactor such that the said effluent and the said oxidising gas are injected in cocurrent towards the said bed (3) and then towards the said membrane (4) filtration device.

2. Purification installation according to claim 1, **characterised in that** the said material (3) consists of a solid mineral material with a capacity for adsorption of organic materials.

3. Purification installation according to claim 2, **characterised in that** the said solid mineral material is doped in metallic substances.

4. Purification installation according to any one of claims 1 to 3, **characterised in that** the said material (3) is present in the said reaction vessel (1) in the form of a fluidised bed.

5. Purification installation according to claim 4, **characterised in that** the said material (3) has a size grading less than 100 µm.

6. Purification installation according to claim 5, **characterised in that** the said material (3) has a size grading between about 10 nm and about 40 µm.

7. Purification installation according to one of claims 2 to 6, **characterised in that** the said material (3) comprises at least one material belonging to the following group:
- alumina;
- titanium;
- coal;
- activated carbon;
- polymetallic oxides.

8. Purification installation according to any one of claims 1 to 7, **characterised in that** the membranes (4) are micro-filtration membranes.

9. Purification installation according to any one of claims 1 to 7, **characterised in that** the membranes (4) are ultra-filtration membranes.

10. Purification installation according to any one of claims 1 to 7, **characterised in that** the membranes (4) are nano-filtration membranes.

11. Purification installation according to any one of claims 8 to 10, **characterised in that** the said membranes (4) are of the mineral type.

12. Purification installation according to any one of claims 8 to 10, **characterised in that** the said membranes (4) are of the organic type.

13. Purification installation according to any one of claims 1 to 12, **characterised in that** the said catalyst material (3) forms a pre-layer on the surface of the said membrane (4) filtration device.

14. Purification installation according to any one of claims 1 to 13, **characterised in that** the said oxidising gas comprises at least one of the oxidants belonging to the following group:
- air;
- ozone;
- ozoned air;
- nitrogen oxides;
- oxygen.

15. Purification installation according to any one of claims 1 to 14, **characterised in that** it includes means of adding H₂O₂ into the said reaction vessel.

16. Purification installation according to any one of claims 1 to 15, **characterised in that** it comprises a recirculation loop (7) of the said effluent in the said reaction vessel.

17. Purification installation according to any one of claims 1 to 16, **characterised in that** it comprises a recirculation loop (6) for gases output from the said vent (5).

18. Purification installation according to any one of claims 1 to 17, **characterised in that** the said reaction vessel (1) is made in the form of a column with no mechanical stirring.

19. Process implemented using an installation according to any one of claims 1 to 18, **characterised in that** said effluent and said oxidising gas are injected in cocurrent at the bottom of said reactor in direction of said bed of catalyst material (3) and then in direction of said filtering device with membranes (4), the said oxidising gas being added continuously into the said reaction vessel (1).

20. Process according to claim 19, **characterised in that** the contact time between the said effluent and the said material (3) is between about 5 minutes and about 3 hours.

21. Process according to claim 20, **characterised in that** the contact time between the said effluent and the said material (3) is between about 30 minutes and about 60 minutes.

22. Process according to any one of claims 19 to 21, **characterised in that** it comprises a step to recirculate the said effluent.

23. Process according to any one of claims 19 to 22, **characterised in that** it comprises a step to recirculate gases.

24. Process according to any one of claims 19 to 23, **characterised in that** the filtration step is performed by suction in external - internal configuration.

25. Process according to claim 24, **characterised in that** the said filtration step is done with a suction pressure of less than 1 bar.

26. Process according to claim 25, **characterised in that** the said filtration step is done with a suction pressure of between 0.1 bars and about 0.8 bars.

## Patentansprüche

1. Kläranlage zum Reinigen eines mit organischen Stoffen belasteten wässrigen Abwassers, von der Art, die mindestens einen Reaktor (1) aufweist, welcher mindestens einen Einlass (9) für das besagte Abwasser, mindestens einen Ablauf (10) für das besagte Abwasser, mindestens eine Abluftvorrichtung (5) sowie Mittel zum Injizieren (2) von mindestens einem oxidierenden Gas umfasst, wobei der besagte Reaktor ein Bett eines Materials (3) aufweist, welches das Katalysieren der Oxidierungsreaktion des besagten organischen Stoffes aus dem besagten Abwasser und/oder das Adsorbieren dieses organischen Stoffes ermöglicht,
**dadurch gekennzeichnet, dass** der besagte Reaktor eine einzige Kammer bildet, die eine Membranfilterungsvorrichtung mit eingetauchten Membranen (4) sowie das besagte Bett (3) enthält, wobei die besagten Mittel zum Injizieren (2) von mindestens einem oxidierenden Gas und der besagte Einlass (9) für das besagte Abwasser an der Basis des besagten Reaktors angebracht sind, so dass das besagte Abwasser und das besagte oxidierende Gas in gleicher Strömungsrichtung im Verhältnis zum besagten Bett (3) und dann zur besagten Membranfilterungsvorrichtung (4) injiziert werden.

2. Kläranlage nach Anspruch 1, **dadurch gekennzeichnet, dass** der besagte Stoff (3) aus einem mineralischen Feststoff besteht, der die Fähigkeit zum Absorbieren organischer Stoffe besitzt.

3. Kläranlage nach Anspruch 2, **dadurch gekennzeichnet, dass** der besagte mineralische Feststoff mit metallischen Stoffen gedopt ist.

4. Kläranlage nach einem der Ansprüche 1 bis 3, **dadurch gekennzeichnet, dass** der besagte Stoff (3) im besagten Reaktor (1) in Form eines Fließbetts vorhanden ist.

5. Kläranlage nach Anspruch 4, **dadurch gekennzeichnet, dass** die Körnung des besagten Stoffes (3) geringer ist als 100 µm.

6. Kläranlage nach Anspruch 5, **dadurch gekennzeichnet, dass** die Körnung des besagten Stoffes (3) zwischen ca. 10 nm und ca. 40 µm liegt.

7. Kläranlage nach einem der Ansprüche 2 bis 6, **dadurch gekennzeichnet, dass** der besagte Stoff (3) mindestens eine Substanz aus der folgenden Gruppe enthält:
- Tonerde,
- Titan,
- Kohle,
- Aktivkohle,
- polymetallische Oxide.

8. Kläranlage nach einem der Ansprüche 1 bis 7, **dadurch gekennzeichnet, dass** es sich bei den besagten Membranen (4) um Mikrofilterungsmembranen handelt.

9. Kläranlage nach einem der Ansprüche 1 bis 7, **dadurch gekennzeichnet, dass** es sich bei den besagten Membranen (4) um Ultrafilterungsmembranen handelt.

10. Kläranlage nach einem der Ansprüche 1 bis 7, **dadurch gekennzeichnet, dass** es sich bei den besagten Membranen (4) um Nanofilterungsmembranen handelt.

11. Kläranlage nach einem der Ansprüche 8 bis 10, **dadurch gekennzeichnet, dass** es sich bei den Membranen (4) um mineralische Membranen handelt.

12. Kläranlage nach einem der Ansprüche 8 bis 10, **dadurch gekennzeichnet, dass** es sich bei den besagten Membranen (4) um organische Membranen handelt.

13. Kläranlage nach einem der Ansprüche 1 bis 12, **dadurch gekennzeichnet, dass** der besagte Katalysatorstoff (3) eine Vorschicht an der Oberfläche der besagten Membranfilterungsanlage (4) bildet.

14. Kläranlage nach einem der Ansprüche 1 bis 13, **dadurch gekennzeichnet, dass** das besagte oxidierende Gas mindestens eines der Oxidationsmittel aus der folgenden Gruppe enthält:
- Luft;
- Ozon;
- mit Ozon angereicherte Luft;
- Stickoxide;
- Sauerstoff.

15. Kläranlage nach einem der Ansprüche 1 bis 14, **dadurch gekennzeichnet, dass** sie über Mittel zum Hinzufügen von H₂O₂ in den besagten Reaktor verfügt.

16. Kläranlage nach einem der Ansprüche 1 bis 15, **dadurch gekennzeichnet, dass** sie eine Schleife (7) aufweist, um das besagte Abwasser erneut durch den besagten Reaktor zu leiten.

17. Kläranlage nach einem der Ansprüche 1 bis 16, **dadurch gekennzeichnet, dass** sie eine Schleife (6) aufweist, um die aus der besagten Abluftvorrichtung (5) kommenden Gase erneut durch den besagten Reaktor zu leiten.

18. Kläranlage nach einem der Ansprüche 1 bis 17, **dadurch gekennzeichnet, dass** der besagte Reaktor (1) in Form einer nicht mechanisch gerührten Säule ausgeführt ist.

19. Verfahren, das mit Hilfe einer Anlage nach einem der Ansprüche 1 bis 18 ausgeführt wird, **dadurch gekennzeichnet, dass** das besagte Abwasser und das besagte oxidierende Gas mit gleicher Fließrichtung am Boden des besagten Reaktors in Richtung auf das besagte Bett katalysierenden Materials (3) und dann in Richtung auf die besagte Membranfilterungsvorrichtung (4) injiziert werden, wobei das Injizieren des besagten oxidierenden Gases in den besagten Reaktor (1) kontinuierlich erfolgt.

20. Verfahren, das mit Hilfe einer Anlage nach Anspruch 19 ausgeführt wird, **dadurch gekennzeichnet, dass** die Berührungszeit zwischen dem besagten Abwasser und dem besagten Material (3) zwischen ca. 5 Minuten und ca. 3 Stunden liegt.

21. Verfahren, das mit Hilfe einer Anlage nach Anspruch 20 ausgeführt wird, **dadurch gekennzeichnet, dass** die Berührungszeit zwischen dem besagten Abwasser und dem besagten Material (3) zwischen ca. 30 Minuten und ca. 60 Minuten liegt.

22. Verfahren nach einem der Ansprüche 19 bis 21, **dadurch gekennzeichnet, dass** es einen Schritt zum erneuten Durchleiten des besagten Abwassers aufweist.

23. Verfahren nach einem der Ansprüche 19 bis 22, **dadurch gekennzeichnet, dass** es einen Schritt zum erneuten Durchleiten der Gase aufweist.

24. Verfahren nach einem der Ansprüche 19 bis 23, **dadurch gekennzeichnet, dass** der Filterungsschritt durch Ansaugen nach einer Außen-Innen-Konfiguration erfolgt.

25. Verfahren nach Anspruch 24, **dadurch gekennzeichnet, dass** der besagte Filterungsschritt mit einem Ansaugdruck von weniger als 1 bar ausgeführt wird.

26. Verfahren nach Anspruch 25, **dadurch gekennzeichnet, dass** der besagte Filterungsschritt mit einem Ansaugdruck zwischen ca. 0,1 bar und ca. 0,8 bar ausgeführt wird.
